# EUROPEAN PATENT APPLICATION

(11) **EP 4 339 230 A1**
(43) Date of publication of application: **20.03.2024**
(21) Application number: 23168816.9
(22) Date of filing: 19.04.2023
(51) Int. Cl.: C08J 5/18, C08J 7/04, C08J 7/048, C08J 7/06

(54) **MULTILAYER PACKAGING FILM**

(30) Priority: 07.09.2022 BY 20220048
(71) Applicant: NanoPolymer Ltd., 220030 Minsk Belarus (BY)
(72) Inventor: Patsukevich, Vitaliy Stanislavovich, Minsk (BY)
(74) Representative: Lampart, Jerzy

(57) **Abstract**

This invention relates to multilayer materials and is intended for packaging of various types of consumer food products.

The film 1 includes a base foil (2) in the form of a white base film (6) made of a thermoplastic polymer material, mainly high-density polyethylene (HDPE), dispersed with a mineral filler (10) of chalk CaCO₃ or talc Mg₃Si₄O₁₀(OH)₂ and titanium dioxide TiO₂ at the following component content, wt.%:
• chalk (CaCO₃) or talc (Mg₃Si₄O₁₀(OH)₂) - 20 ÷ 70
• titanium dioxide TiO₂ - 0 ÷ 10
• thermoplastic polymer material as the rest.

The film (1) contains an adhesive binder layer (3) on the outer (8) or inner (9) surface of the base film (6), which is coated with a metallized coating (4) of aluminum nanoparticles (7) in an amount of 1-5% of the mass of HDPE with a thickness of 10 to 500nm and a printed coating (5). A thermoplastic polymer material may include a dye and an OXO-biodegradable additive in the amount of 1-20 wt.% as salts of transition metal ions in the form of carboxylates, which ensures the biodegradability of the polymer material.

## Description

This invention relates to multilayer materials, in particular a multilayer film imitating paper-coated foil, and is intended for packaging of various types of consumer goods, in particular food products (e.g. butter, margarine, etc.).

Packaging of any kind of products, including food products, is an important part of the industry including the production and distribution of consumer goods. Most of the food and non-food products should be protected and sold as packaged items. The packaging material must ensure the safety and effective protection of products from the effects of environmental factors (moisture, air oxygen, carbon dioxide, nitrogen, etc.).

A multilayer metallized film and a method for its production are well known [1]. This film includes a metal layer formed by a metal selected from a group consisting of aluminum, zinc, silver and gold deposited by vacuum metallization on the first surface of the first plastic layer. A second plastic layer consists of isotactic propylene or a mixture of isotactic propylene and polypropylene polymers, which is co-extruded along with the first plastic layer and attached to the second surface of the first plastic layer. The first and second plastic layers are bioriented. The first plastic layer contains a propylene-butene copolymer or a mixture of propylene-butene copolymer and propylene polymers, and the first surface of the first plastic layer is subjected to preliminary activating treatment. Activation consists of flame treatment (in most cases) or corona charging, followed by prior metallization by plasma spraying under a partial vacuum, followed by spraying of a metal layer. Plastic film is characterized by an oxygen transmission rate (OTR) equal to or less than 10 cm³/(day·m²) at a thickness of 20 µm, and a water vapor transmission rate (WVTR) equal to or less than 0.1 g/(day·m²) at a thickness of 20 mm. The first plastic layer has a thickness of 0.5 to 2 µm, and the metal layer has a thickness of 100 Å to 350 Å.

Thermoformable multilayer film is also well known [2]. The film structure includes the first polymer layer having the first and second surfaces, where the first polymer layer consists of metallized polyethylene terephthalate, the second polymer layer also having the first and second surfaces, where its first surface is located next to the second surface of the first polymer layer, and the second polymer layer includes cyclic olefin or chlorotrifluoroethylene homopolymer and the third polymer layer having first and second surfaces, where the first surface of the third polymer layer is located next to the second surface of the second polymer layer, and the specified third polymer layer includes polypropylene or polyvinyl chloride. Additionally, the film structure includes bonding layers made of adhesive varnish located between the corresponding surfaces of the first polymer layer, the second polymer layer and the third polymer layer and is a multilayer film structure in the form of a laminated structure forming a metallized layer on the first polymer layer.

The metallized layer consists of at least one metal selected from a group of metals, which consists of aluminum, copper, silver, gold, brass or bronze and is formed using known metallization methods such as vacuum spraying, indirect metallization, chemical deposition, electrolytic coating and varnishing. The film structure has a density of 0.98 to 1.03 g/cm³ and is characterized by WVTR of 0.20 to 3.00 g/m²/day according to ASTMF-1249.

The patent application [3] describes an artificial foil for packaging rectangular items. This foil contains a base foil made of oriented polypropylene film or polyethylene terephthalate film with a metallized coating on one side. A printed coating is applied to a metallized side of the base foil, and a cold-setting adhesive is applied to a side of the base foil free of the metallized coating using profiling in the form of a tape. A biaxially oriented polypropylene film is used as the base foil. The printed coating is partially profiled with a non-adhesive varnish layer, while the surfaces of the printed coating are consistent with the surfaces of the cold-setting adhesive. A primer or adhesive layer is provided between the metallized coating and the printed one. The base foil is a compact foil or a porous foil where the pores are formed as cells either by stretching the foil or by foaming. The thickness of compact base foil is about 10-100 µm, preferably 20-50 µm, in particular 28-32 µm, and that of porous base foil is about 10-100 µm, preferably 20-50 µm, in particular 35-42 µm.

The disadvantages of the known analogues are the long period of natural aging of the spent film due to the lack of effective destruction of the artificial foil *in vivo,* which leads to environmental pollution. Disadvantages include low reflectivity compared to natural foil due to the quality of the metallized coating, which also reduces the consumer qualities of the film.

Artificial foil with a base foil, chosen as a prototype, is also well known [4]. The base foil is metallized on one side and made of oriented polypropylene foil or polyethylene terephthalate foil. The metallized coating is overprinted and profiled with a heat-sealing varnish. Biaxially oriented compact or porous polypropylene foil with a thickness of about 10-100 µm, preferably 20-50 µm, in particular 28-32 µm, is used as a base foil, and the existing voids in the base foil are characterized by a thickness of about 10-100 µm, preferably 20-25 µm, in particular 35-40 µm. The surfaces of the printed coating that are free of sealing varnish are covered with a layer of coating varnish applied also using profiling, and a primer or adhesive layer is provided between metallized and printed coatings, while at least one additional layer is applied to, preferably, the inner side of the base foil, that is free of the printed coating. The metallized coating is applied by spraying aluminum and has a primer layer on the reverse side of the base foil for better adhesion, which is a two-part polyurethane system and coated with the printed coating. Printed coating is carried out by applying a nitrocellulose-based dye by deep or flexographic printing, and a heat-sealing varnish (e.g. sealing wax) is profiled to this printed coating. Here, sealing wax based on polyvinylidene chloride or ethylvinyl acetate or acrylate can be used, and surface parts free from this sealing varnish have a layer of coating varnish.

Disadvantages of the prototype include low consumer properties and increased WVTR due to the high porosity of polypropylene foil. Disadvantages also include weak ability to memorize the shape when folding the film into a briquette due to its low rigidity. Disadvantages also include a long period of natural aging of the spent film, which leads to environmental pollution. Disadvantages include low reflectivity compared to natural foil due to the quality of the metallized coating, which also reduces the consumer qualities of the film.

The purpose of the invention is to eliminate these shortcomings and produce multilayer packaging film with improved physical and technical properties.

The technical result of the invention includes improved consumer properties, such as the ability to memorize the shape when folding the film into a briquette and reduced WVTR. The technical result also includes an improvement in the optical and environmental properties of the multilayer packaging film.

The technical result is achieved by the fact that in the multilayer packaging film containing a base foil made of thermoplastic polymer material with an adhesive binder layer, metallized with a coating on one side, coated with the printed coating, **according to the invention,** the base foil of thermoplastic polymer material is made mainly of high-density polyethylene in the form of a white paper-imitating base film, which is dispersed by a mineral filler of chalk CaCO₃ or talc Mg₃Si₄O₁₀(OH)₂ and titanium dioxide TiO₂ at the following component content, wt.%:
- chalk (CaCO₃) or talc (Mg₃Si₄O₁₀(OH)₂) - 20 ÷ 70
- titanium dioxide TiO₂ - 0 ÷ 10
- thermoplastic polymer material as the rest,
and the metallized coating consists of aluminum nanoparticles homogeneously distributed on the surface of the base film in an amount of about 1-5% by weight of the thermoplastic polymer material and is applied to the adhesive bonding layer, which is made on the outer or inner surface of the base film, while the thermoplastic polymer material may include a dye of a given color, as well as an additive that ensures its biodegradability, where the outer or inner layer of this metallized nano-coating has barrier properties and is characterized by a low water vapor transmission rate.

The adhesive bonding layer is a solvent or solvent-free adhesive or equivalent, which ensures the adhesion of aluminum nanoparticles to the base film.

The thickness of the metallized coating layer of aluminum nanoparticles is 10 to 500 nm.

The thermoplastic polymer material of the base foil can also be selected in the form of polypropylene or equivalent and contains a dye of a predominantly white dye (e.g. titanium dioxide).

The biodegradable additive is selected from the OXO-biodegradable class, included in high-density polyethylene or other thermoplastic polymer material in the amount of 1-20 wt.%, and is salts of transition metal ions in the form of carboxylates, which provide biological decomposition of the thermoplastic polymer material of the base foil under heat and light.

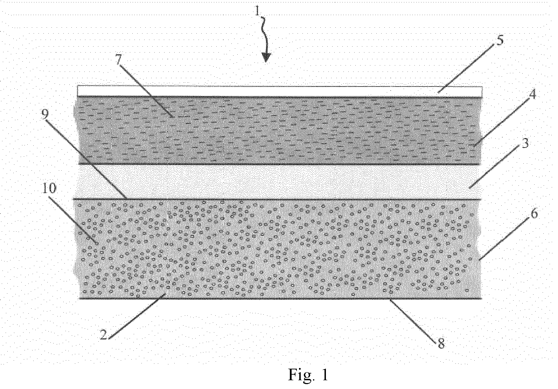

The concept of the invention is explained by the drawing in Figure 1 showing the type of multilayer packaging film in cross section.

Multilayer packaging film (1) includes a base foil (2) in the form of a white base film (6) made of a thermoplastic polymer material, mainly high-density polyethylene (HDPE), with a dispersed mineral filler (10), an adhesive binder layer (3) on the outer (8) or inner (9) surface of the base film (6), a metallized coating (4) of nano-aluminum particles (7) and a printed coating (5).

### Implementation of the invention.

Multilayer packaging film (1) is made as follows. Base foil (2) is made of a thermoplastic polymer material, mainly high-density polyethylene (HDPE) or, for example, polypropylene or other similar material in the form of a white base film (6) which imitates laminated paper, while the polymer material of the base film (6) is dispersed with a mineral filler of chalk CaCO₃ or talc Mg₃Si₄O₁₀(OH)₂ in the amount of 20 ÷ 70 wt.% and titanium dioxide TiO₂ in the amount of 0 ÷ 10 wt.%, and HDPE as the rest. For the purpose, the specified mineral filler is pre-mixed with HDPE or other plastic, e.g. polypropylene, or another polymer in an extruder (not shown in the drawing) to obtain a film. A dye of a given color, predominantly white (e.g. the mentioned titanium dioxide - TiO₂) is simultaneously introduced into the extruder. To obtain a variant of the biodegradable film (1), an additive from the OXO-biodegradable class is additionally introduced into the extruder together with HDPE in an amount of 1-20 wt.%, which is salts of transition metal ions in the form of carboxylates or in any other form that provides biological decomposition of the thermoplastic polymer material of the base foil (2) under heat and light. Further, an adhesive binder layer 3 of solvent or solvent-free adhesive or equivalent providing adhesion of aluminum nanoparticles (7) to the base film (6) is applied to the resulting thermoplastic polymer film-base (6), on its outer (8) or inner (9) surfaces. Then, aluminum nanoparticles (7) are sprayed onto the carrier film (not shown in the drawing) in the metallizer. Then, the side with a layer aluminum nanoparticles (7) of the carrier film is glued to the base film (6) using an adhesive binder layer (3) and wound onto a bobbin (not shown in the drawing). At the last stage, the carrier film is separated from the base film (6) on a bobbin cutter (not shown in the drawing), while aluminum nanoparticles (7) from the carrier film are glued to the base film (6) using an adhesive binder layer (3), forming a metallized layer (4). It is also possible to apply a metallized layer (4) directly to the base film (6) in a metallizer, which makes it possible to get an additional effect of matte foil. The resulting outer (8) or inner (9) layer (4) with a metallized nano-coating consists of aluminum nanoparticles (7) homogeneously distributed on the surface of the base film (6) in the amount of 1-5% of the mass of HDPE has a thickness of 10 to 500nm. The layer with aluminum nanoparticles (7) is external, has a reflectivity of about 82-84% and has barrier properties, while the other layer (8) of the film (1) is facing the product, and the binding layer (3) is adjacent to the inner layer (9).

On the top of the metallized coating (4) of one side of the film (1), a printed coating (5) is applied in any known way. The multilayer packaging film (1) is characterized by a low water vapor transmission rate, no more than 0.3 g /m² per day at 38°C and a relative humidity of 90%.

The introduction of an OXO-biodegradable additive into the composition of the film (1) as a prodegradant in the amount of 1-20 wt.% containing salts of transition metal ions in the form of carboxylates and acting as a catalyst causes rapid destruction of long molecular chains of HDPE under light and/or heat, which results in the fact that the plastic base of the film (1) becomes fragile and quickly breaks up into tiny flakes, while the molecular weight of the polymer quickly decreases to 40,000 and the material becomes hydrophilic, consequently, microorganisms (bacteria and fungi) gain access to carbon and hydrogen. As a result, microorganisms process carbon and hydrogen into CO₂ and H₂O, respectively, and thus an accelerated "biological decay", i.e. the disposal of waste from the used multilayer packaging film (1), is achieved. Thus, tests have established that the complete destruction of a package of HDPE with a filler of chalk CaCO₃ in the amount of 20 ÷ 70 wt.% with the addition of up to 8% salts of transition metal ions in the form of carboxylates after UV irradiation in a chamber with 100% humidity at 90°C under the influence of microorganisms occurs within a month.

The resulting multilayer packaging film (1) successfully replaces laminated foil. Moreover, depending on the purpose, the new film has such properties as grease resistance, the ability to memorize the shape when folded into a briquette, and has a shine and appearance of natural foil while containing a minimum amount of aluminum nanoparticles (7) (not more than 5%), which is achieved by the optimal distribution of aluminum nanoparticles (7) on the surface of the base film (6). The environmental friendliness of the multilayer packaging film (1) is due to the fact that the base material (6) is homogeneous and includes a mineral filler (usually chalk, more than 50%, which is environmentally inert) which allows waste to be processed at film recycling facilities. In addition, the ecological effect is also achieved by good biodegradability of the film *in vivo.* The material of the new multilayer packaging film (1) contains a minimum amount of aluminum in the form of nanoparticles and thus does not require the use of aluminum foil, which has a large carbon footprint. Thus, all of the above advantages of the invention ensure the achievement of the claimed technical result.

### References

1. WO 2006/027033, 16.03.2006.
2. WO 2011/027225, 10.03.2011.
3. DE 10221143.4, 11.05.2002.
4. RU 2245792, 08.05.2003 (prototype).

## Claims

1. Multilayer packaging film (1) containing a base foil (2) made of thermoplastic polymer material with an adhesive binder layer (2), metallized with a coating (4) on one side, coated with the printed coating (5),
**characterized in that** the base foil (2) of thermoplastic polymer material is made mainly of high-density polyethylene in the form of a white paper-imitating base film (6), mainly high-density polyethylene (HDPE),which is dispersed by a mineral filler of chalk CaCO₃ or talc Mg₃Si₄O₁₀(OH)₂ and titanium dioxide TiO₂ at the following component content, wt.%:
• chalk (CaCO₃) or talc (Mg₃Si₄O₁₀(OH)₂) - 20 ÷ 70
• titanium dioxide TiO₂ - 0 ÷ 10
• thermoplastic polymer material as the rest,
and the metallized coating (4) consists of aluminum nanoparticles (7) homogeneously distributed on the surface of the base film in an amount of about 1-5% by weight of the thermoplastic polymer material and is applied to the adhesive bonding layer (3), which is made on the outer (8) or inner (9) surface of the base film (6), while the thermoplastic polymer material may include a dye of a given color, as well as an additive that ensures its biodegradability, where the outer (8) or inner (9) layer of this metallized nano-coating has barrier properties and is **characterized by** a low water vapor transmission rate.

2. Multilayer film according to claim 1, **characterized in that** the adhesive bonding layer (3) is a solvent or solvent-free adhesive or equivalent, which ensures the adhesion of aluminum nanoparticles (7) to the base film (6).

3. Multilayer film according to claim 1, **characterized in that** the thickness of the metallized coating layer (4) of aluminum nanoparticles is 10 to 500nm.

4. Multilayer film according to claim 1, **characterized in that** the thermoplastic polymer material of the base foil (2) contains a dye of predominantly white color (e.g. titanium dioxide).

5. Multilayer film according to claim 1, **characterized in that** the biodegradable additive is selected from the OXO-biodegradable class and included in a thermoplastic polymer material in an amount of 1-20 wt.% and is salts of transition metal ions in the form of carboxylates, which provide biological decomposition of the thermoplastic polymer material of the base foil (2) under heat and light.
